**Europäisches Patentamt**

**European Patent Office**

**Office européen des brevets**

(19)

(11) Veröffentlichungsnummer: **0 156 395**

A2

(12) # EUROPÄISCHE PATENTANMELDUNG

(21) Anmeldenummer: **85103837.2**

(22) Anmeldetag: **29.03.85**

(51) Int. Cl.⁴: **B 25 D 3/00**
B 21 D 53/64, B 21 K 11/06
C 22 C 14/00

(30) Priorität: **30.03.84 DE 3411855**

(43) Veröffentlichungstag der Anmeldung:
**02.10.85 Patentblatt 85/40**

(84) Benannte Vertragsstaaten:
**BE CH FR GB IT LI NL**

(71) Anmelder: **Fritz Bracht GmbH**
**Böcklinstrasse 10**
**D-5650 Solingen(DE)**

(71) Anmelder: **Krupp Stahl AG**
**Alleestrasse 165**
**D-4630 Bochum 1(DE)**

(72) Erfinder: **Kramer, Karl-Heinz, Dr. Ing.**
**August-Schmidt-Strasse 48**
**D-4330 Mülheim(DE)**

(72) Erfinder: **Mertens, Wolfgang**
**Gerhart-Hauptmannstrasse 5**
**D-5650 Solingen 1(DE)**

(74) Vertreter: **Patentanwaltsbüro Cohausz & Florack**
**Postfach 14 01 47**
**D-4000 Düsseldorf 1(DE)**

(54) **Verwendung einer schmiedbaren Titanlegierung zur Herstellung von Schneide und Gegenschneide aufweisenden Trennwerkzeugen.**

(57) Die Erfindung betrifft die Verwendung einer schmiedbaren Titanlegierung zur Herstellung von Schneide und Gegenschneide aufweisenden Trennwerkzeugen, insbesondere Einhandscheren. Die die Schneide und Gegenschneide bildenden Flächen sollen dabei mit einer 0,001 bis 0,020 mm dicken Hartstoffschicht versehen sein. Die Erfindung umfaßt auch ein Verfahren zur Herstellung einer Einhandschere und ferner Merkmale einer solchen Schere.

Fig.1

EP 0 156 395 A2

Fritz Bracht GmbH          Krupp Stahl Aktiengesellschaft
5650 Solingen             4630 Bochum


Verwendung einer schmiedbaren Titanlegierung zur Herstellung von Schneide und Gegenschneide aufweisenden Trennwerkzeugen.

Die Erfindung betrifft die Verwendung einer schmiedbaren Titanlegierung gemäß Patentanspruch 1, ein Verfahren zum Herstellen einer Einhandschere aus Metall gemäß Oberbegriff des Patentanspruches 5 und eine Einhandschere aus Metall gemäß Oberbegriff des Patentanspruches 6. Durch die DE-AS 21 06 687 wird eine Titanlegierung mit der Bezeichnung Ti 6Al 4V als herkömmlich hingestellt und vorgeschlagen, Titanlegierungen, die 47 bis 51 % Titan enthalten für gleitbeanspruchte Maschinenteile oder Industrieanlagenteile zu verwenden. Dabei ist einmal an Gleitpaarungen in typischen Maschinenelementen, an Schneidblätter für Werkzeugmaschinen und andere spanabhebende Einrichtungen, wie auch an medizinische Instrumente, wie Messer, gedacht, soweit die etwa 50 % Titan enthaltende Legierung betroffen ist.

Einhandscheren sind jedermann aus dem täglichen Gebrauch bekannt. Sie bestehen in der Regel aus Edelstahl und haben für den gewöhnlichen Hausgebrauch dank des heute zur Verfügung stehenden Standes der Fertigungstechnik eine durchaus zufriedenstellende Qualität bezüglich Handhabung und Lebensdauer. Wird die Schere zum Handwerkzeug, wie Haarschneidescheren für Friseure, so wird an diese besonders hohe Anforderungen gestellt. Für Haarschneidescheren werden bislang härtbare Chromstähle, z.B. der Werkstoff-Nr. 4034 mit 0,4 % Kohlenstoff und 13 % Chrom verarbeitet. Diese Scheren haben eine hohe Schneidkantenhärte, die für lange Zeit eine ausreichende Schneidgenauigkeit garantiert.

Insbesondere Damenfriseure gehen mehr und mehr dazu über Haare naß zu schneiden, wobei noch Reste von Haarwaschmitteln und sonstige Mittel, wie Haarfestiger, im nassen Haar enthalten sein können. Diese Mittel enthalten Alkalien, die in Verbindung mit dem vom Waschen noch feuchten Haar Laugen bilden, die das Material der Schere, insbesondere die Blätter, korrodierend angreifen und zu örtlicher, punktförmiger Korrosion führen können. Diese Erscheinung wird als Lochfraßkorrosion bezeichnet. Die örtlichen Korrosionspunkte bewirken mit der Zeit ein unschönes Aussehen der Blätter und können auch die Schnittqualität beeinträchtigen. Sie können zwar durch Nachschleifen der Blätter beseitigt werden; dieses Nachschleifen führt jedoch zu einer Herabsetzung der Schneidkantenhärte, so daß im Laufe der Zeit in kürzer werdenden Abständen nachgeschliffen werden muß. Durch das Nachschleifen wird die Geometrie der Schere geringfügig verändert und dadurch eine mehr oder weniger fühlbare Veränderung im Schneidverhalten bewirkt. Im übrigen wird bei verschiedenen Friseurscheren aus Edelstahl einem Abgleiten der Haare beim Schneiden durch in die Wate eingearbeitete Querrillen entgegengewirkt.

Aufgabe der Erfindung ist es, eine Schere zu schaffen, die unempfindlicher gegen Korrosionsangriff ist und die über einen langen Zeitraum, insbesondere als Haarschneideschere, gleichbleibende Eigenschaften in Qualität und Schneidverhalten aufweist. Eine Nebenaufgabe der Erfindung ist es, das Schneidverhalten zu optimieren.

Erfindungsgemäß wird daher vorgeschlagen, zur Herstellung von Schneide und Gegenschneide aufweisenden Trennwerkzeugen, insbesondere Friseurscheren, Titanlegierungen gemäß den Patentansprüchen 1 bis 4 zu verwenden, mit der Maßgabe, daß die Schneide und Gegenschneide bildenden Flächen mit einer 0,001 bis 0,020 mm dicken Hartstoffschicht versehen sind. Diese kann mindestens 30% Titan enthalten.

Bevorzugt werden für Friseurscheren Legierungen nach den Ansprüchen 3 bis 5.

Die weitere Aufgabe, ein geeignetes Herstellungsverfahren für Einhandscheren aus Metall zu schaffen, wird durch die Merkmale des Patentanspruches 6 gelöst.

Einhandscheren, insbesondere Friseurscheren, gemäß den Ansprüchen 7 bis 19 stellen weitere vorteilhafte Lösungen der eingangs gestellten Aufgabe dar.

Überraschenderweise hat es sich nun ergeben, daß unter Anwendung der Erfindung hergestellte und gestaltete Friseurscheren sehr handhabungssymphatisch sind und dem Friseur das Gefühl, weich zu schneiden, vermitteln. Der Eindruck, die erfindungsgemäße Schere sei zu leicht, verschwindet schon nach wenigen Haarschnitten. Die erfindungsgemäße Schere darf, damit die Hartstoffschicht nicht zerstört wird, nicht einfach nur nachgeschliffen werden. Vielmehr ist es erforderlich, nach einem eventuellen Nachschleifen auch eine erneute Beschichtung anzuschließen. Ihre über einen Versuchszeitraum von 6 Monaten gleichbleibende Schnittqualität - es wurde eine nitrierte Schere eingesetzt - verspricht eine lange Lebensdauer.

Die besonderen Ausgestaltungen von Einhandscheren nach den Patentansprüchen 8 bis 12 und Anspruch 19 stellen vorteilhafte Anpassungen an die beim Haarschneiden auftretenden Gegebenheiten dar.

Oberflächennitrierte, abriebbeständige Werkstücke, insbesondere Schneidwerkzeuge, sind durch die DE-AS 17 58 924 bekannt. Dabei handelt es sich jedoch um Schneidwerkzeuge für die spanabhebende Bearbeitung, z.B. zum Schneiden von hartem Stahl. Auch die DE-AS 21 06 687 schlägt vor, Schneidblätter für Werkzeugmaschinen und andere spanabhebende Einrichtungen aus einer allerdings nur 47 bis 51 % Titan enthaltenden Nickel-Titan-Legierung herzustellen oder medizinische Instrumente, wie Messer und Pinzetten, aus diesem Material zu fertigen. Eine Anregung, Einhandscheren aus einer schmiedbaren Titanlegierung herzustellen, findet sich im Stand der Technik nicht. An sich spricht auch das erwähnte Problem, eine beispielsweise nitrierte Schere aus Titan nicht ohne weiteres nachschleifen zu können, von vornherein gegen die Auswahl dieses Werkstoffes zum Einsatz für den neuen Zweck.

Vorzugsweise wird zum Erzeugen der Hartstoffschicht das Nitrieren eingesetzt und dieses in der Regel auf die gesamte metallische Oberfläche der Scherenhälften ausgedehnt.

Dem Nitrieren ähnlich ist das Karburieren, Borieren und Oxydieren, wenngleich wegen der erprobten guten Gleiteigenschaften dem Nitrieren ein gewisser Vorzug eingeräumt wird.

Auf die Region der Schneiden begrenzt läßt sich die Hartstoffschicht, insbesondere solche aus Titankarbid, Titannitrid oder Titankarbonitrid unter Einsatz thermischer Spritzverfahren wie Flammspritzen bzw. Plasmaspritzen erzeugen. Ebenfalls kann das PVD-Verfahren (Physical Vapor Deposition) zur Erzeugung von Hartstoffschichten angewendet werden. Ein weiteres Verfahren zur regional begrenzten Aufbringung von Hartstoffschichten ist das Aufschmelzen mit einem Laser in einer entsprechenden Gasatmosphäre.

Die nach einem Schleifen und Polieren der Schneiden und nach dem Beschichten scharfen Schneiden werden nach dem Zusammenbau der Scherenhälften durch Öffnen und Schließen der Schere – auch während der späteren Betriebsphase derselben – einer weiteren mechanischen Behandlung unterzogen, indem dadurch im Mikrobereich die Schneide, hauptsächlich ein Bereich von etwa bis zu 0,01 - 0,05 mm auf der hohlen Blattseite entlang der Schneide, bewußt zerstört wird.

Durch diese mikrofeinen Zerstörungen durch die beiden aneinander abgleitenden Schneiden entsteht – ohne daß im Makrobereich eine Beeinträchtigung der Schneidenschärfe erkennbar wäre – eine Aufrauhung der Schneide. Im Abstand von wenigen Tausendstel Millimeter liegende mehr oder weniger harte Zonen der Hartstoffschicht, insbesondere einer Nitridschicht, schleifen sich gegenseitig ab und bilden ein mikrofeines Profil. Dieses bewirkt nun, daß eine erfindungsgemäße Friseurschere ein zu schneidendes Haar gleichsam festhält und verhindert, daß es aus dem Winkel zwischen den Schneiden zur Spitze der Schere hin herausgeschoben wird. Auch dieser Effekt ermöglichte eine Veränderung der Scherengeometrie im Sinne der Erfindung.

Im nachfolgenden wird die Erfindung anhand des in den beigefügten Abbildungen dargestellten Ausführungsbeispieles beschrieben. Von diesen Abbildungen zeigt

Fig. 1 eine Einhandschere aus einer schmiedbaren Titanlegierung.

Fig. 2 einen Ausschnitt aus Fig. 1, nämlich das Gewerbe als Explosionszeichnung.

Fig. 3 einen Schnitt durch eine Einhandschere unter Hervorhebung der Schneidengeometrie.

Fig. 4 einen weiteren Schnitt durch eine Einhandschere in einer Schneidstellung der Blätter.

Fig. 5 eine Schneidposition und die dabei auftretenden Kräfte.

Fig. 6 eine auf Fig. 5 folgende Schneidposition.

Fig. 7 eine auf Fig. 6 folgende Schneidposition.

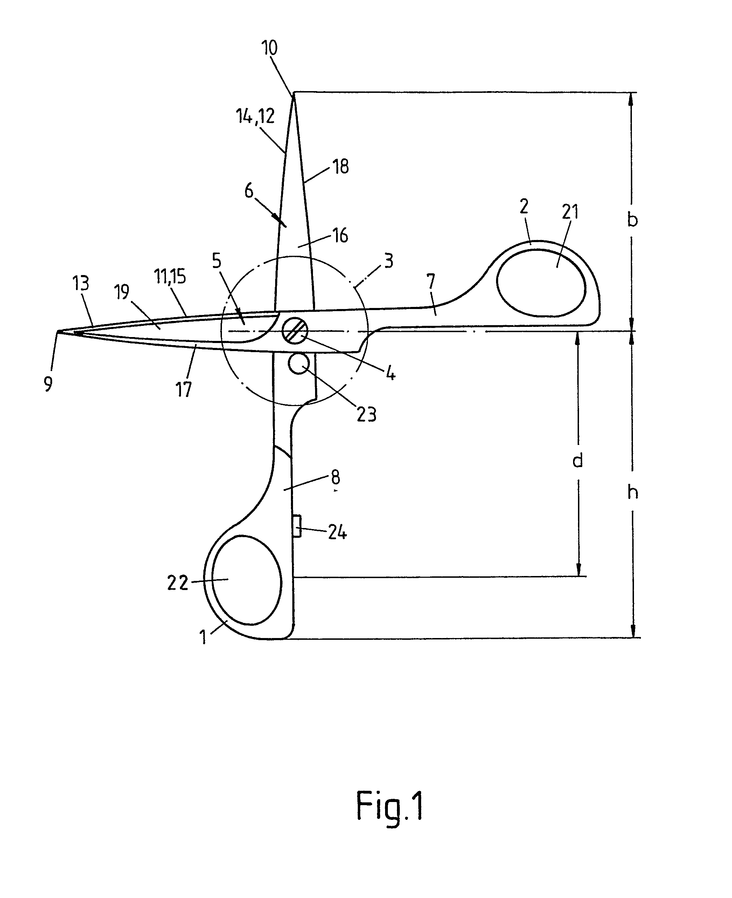

Die in Fig. 1 dargestellte Einhandschere, eine Friseurschere, besteht aus zwei Scherenhälften 1, 2, die im Gewerbe 3 über einen Gewerbebolzen gelenkig miteinander verbunden sind.

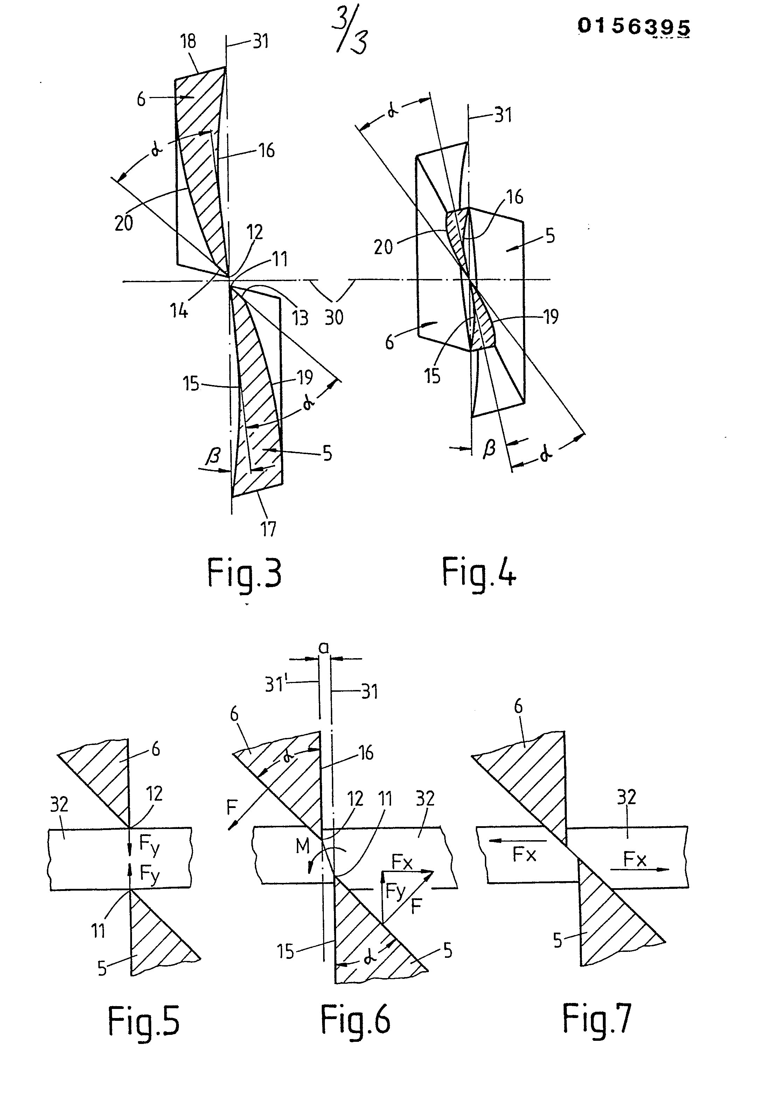

Jede Scherenhälfte 1, 2 wird durch das Gewerbe 3 in ein Scherblatt 5, 6 und einen Halm 7, 8 unterteilt. Das vordere Ende des Scherblattes 5, 6 bildet die Spitze 9, 10. Die Schneide 11, 12 wird jeweils von der Wate 13, 14 und der hohlen Blattseite 15, 16 gebildet (sh. auch Fig. 3).

Gegenüber der Schneide 11, 12 liegt der Rücken 17, 18, an den sich die Außenseite 19, 20 des Scherblattes 5, 6 anschließt.

Am Ende jeden Halmes 7, 8 sitzt ein Griffauge 21, 22. Im Gewerbe 3 ist ein Gleitstück 23 in der Scherenhälfte 8 angeordnet. Ein Gummipuffer 24 wird beim Schließen der Schere wirksam.

In Fig. 1 ist weiterhin ein Längenpfeil b für die Länge des Scherblattes 6, ein Längenpfeil d für die Hebellänge des Halmes 8 und ein Längenpfeil h für die Gesamtlänge des Halmes 8 eingetragen.

An sich ist ein Hebelverhältnis von Scherblatt 6 zum Halm 8 von b : d = 1 : 1,1 bis 1 : 1,4, vorzugsweise um 1 : 1,15 bei Haarscheren nicht üblich. Üblich ist ein Verhältnis von 1 : 0,8 bis 1 : 1, meist 1 : 0,8, während das Gesamtverhältnis b : h regelmäßig bei 1 : 1, gemäß der Erfindung bei 1 : 1,4 bevorzugt liegt.

Das gewählte Längenverhältnis bringt eine Erhöhung der Handkraft beim Schneiden und ist durch die in den Beispielen niedergelegte neue Schneidengeometrie und die Wahl neuer Werkstoffe möglich gemacht worden. Diese wird im Zuge der Beschreibung der Figuren 3 bis 5 näher erläutert.

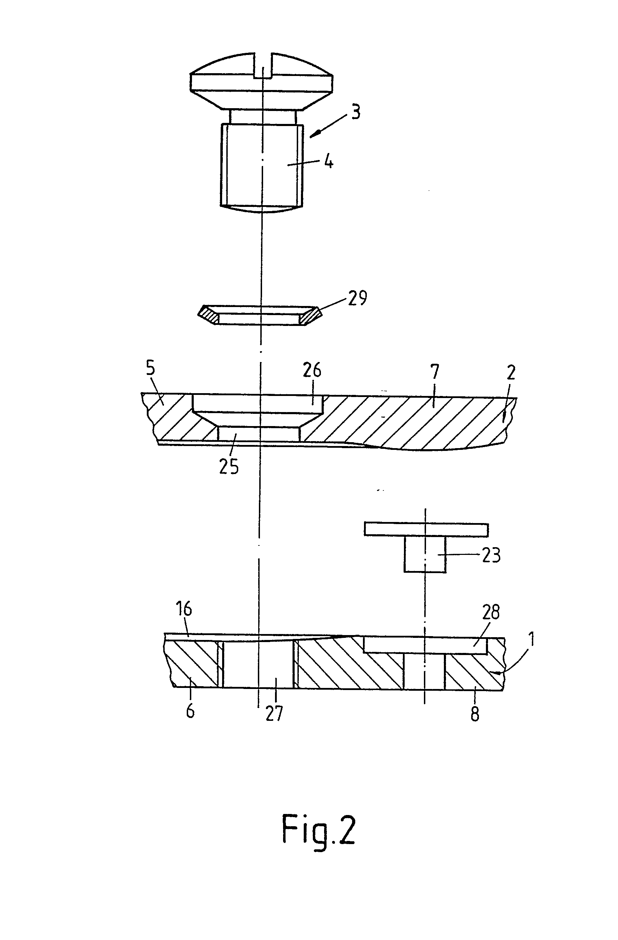

Fig. 2 zeigt als Explosionszeichnung die Lagerstelle der Einhandschere, nämlich das Gewerbe 3. Im Gewerbe 3 sind die in Fig. 2 ausschnittsweise und im Schnitt dargestellten Scherenhälften 1 und 2 miteinander verbunden. In der Scherenhälfte 2 ist eine Bohrung 25 mit einer Senkung 26 und in der Scherenhälfte 1 eine Gewindebohrung 27 zu sehen. Die Bohrung 25 und die Gewindebohrung 27 nehmen den als Schlitzschraube mit konischem Gewinde ausgebildeten Gewerbebolzen 4 auf. Zwischen dem Kopf des Gewerbebolzens 4 und der Scherenhälfte 2 ist eine Kunststoffscheibe 29 in der Senkung 26 angeordnet.

Weiterhin ist das in eine Vertiefung 28 der Scherenhälfte 1 einsetzbare Gleitstück 23 dargestellt und zur besseren Fixierung in der Vertiefung 28 mit einem nicht näher bezeichneten zentralen Ansatz versehen, der in eine entsprechende, ebenfalls nicht näher bezeichnete Bohrung eingepaßt ist.

Für die Herstellung des Gleitstückes 23 und der Kunststoffscheibe 29 wird ein selbstschmierender Werkstoff verwendet, der die Leichtgängigkeit der Haarschere durch Verminderung der Gleitreibung dauerhaft sichert, ohne daß die Schere nachzuölen ist.

In Fig. 3, die einen Schnitt durch beide Scherblätter 5, 6 kurz vor einem Schnitt darstellt, wird die Scherengeometrie deutlich dargestellt. Es ist erkennbar, daß nicht nur die hohle Blattseite 15, 16 einen konkaven Schliff aufweist, sondern daß auch die Außenseite 19, 20 eine gekrümmte Kontur, nämlich eine konvexe Kontur, hat. Das konvexe Scherblatt erhöht das Widerstandsmoment der Scherblätter um etwa 30 %. Um die Schneidengeometrie insgesamt zu erreichen, sind natürlich komplizierte Schleifvorgänge nötig. Nach dem Schleifen und vor dem Nitrieren wird die Wate 13, 14 und mindestens der die Schneide 11, 12 mitbildende Be-

0156395

reich der hohlen Blattseite 15, 16 poliert.

In Fig. 3 ist auch ein Winkel $\alpha$ eingezeichnet, der von der Wate 13, 14 und der hohlen Blattseite 15, 16 gebildet wird. Weiterhin ist auch der Freiwinkel $\beta$ eingezeichnet, der von der in die Schneide 11 einlaufenden hohlen Blattseite 15 und einer Schneide und Rücken auf kürzestem Wege verbindenden gedachten Linie 31 gebildet wird.

Ein Vergleich der Figuren 3 und 4 zeigt den zur Spitze hin steiler werdenden Keilwinkel $\alpha$ . Durch dieses zur Spitze hin steiler werden wird die Schneidwirkung erhöht und die elastische Verformung im Material verringert. Im übrigen ermöglicht der konkave Innenschliff der hohlen Blattseite 15, 16 durch seinen Freiwinkel $\beta$ , der zur Spitze hin größer wird, ein Abgleiten des Schnittgutes.

Der Vergleich der Figuren 3 und 4 weist ebenfalls aus, daß der mittlere Krümmungsradius des Hohlschliffes zur Bildung der konkaven Fläche der hohlen Blattseite 15, 16 vom Gewerbe zur Spitze abnimmt.

Die Figuren Fig. 5 bis Fig. 7 zeigen den Ablauf eines Schneidvorganges, nämlich das Schneiden beispielsweise eines Haares 32.

Fig. 5 zeigt das Aufsetzen und beginnende Eindringen der Schneiden 11, 12 in das zu schneidende Haar. Beim Aufliegen der Scherenblätter 5, 6 entsteht, durch die Kräftepfeile Fy angedeutet, an der Schnittstelle eine Materialverdichtung. Man nennt dies die Druckphase.

Beim weiteren Vordringen beginnt, dargestellt in Fig. 6, das Abscheren, das Verschieben und Trennen der Werkstoffteilchen unter der Scherkraft der keilförmigen Schneiden. Dies ist die Schubphase. In dieser gilt Fy · a gleich F · a · sin $\alpha$ . a ist der Abstand der Linien 31 und 31'. Der Schervorgang wird nun durch das Zerreißen des Werkstoffes beendet. Diese Zugphase ist in Fig. 7 dargestellt. Die Zugkraft Fx entspricht F · cos $\alpha$ .

Bei Haarscheren ist vom Gewerbe bis zur Spitze ein Keilwinkel von 60° üblich. Der zur Spitze hin steiler werdende Keilwinkel $\alpha$ ermöglicht eine geringere Verspannung der Scherenblätter, was eine größere Leichtgängigkeit und eine geringere Abnutzung der Schneidkanten bewirkt. Die gewählte Schneidengeometrie und die Härte der Schneiden ermöglicht den steileren Keilwinkel.

Die Druckphase des Schneidvorganges konnte verlängert werden, so daß die Schubphase, die das Verdrehen des Haares durch das auftretende Moment M ermöglicht, stark verringert ist. Die Zugkräfte, die das Haar zerreißen, sind vergrößert.

Das Merkmal der Einhandschere, daß die einzelnen Teile mit einer Nitridschicht versehen sind, ist in den Abbildungen nicht dargestellt, da die Nitridschicht sehr dünn ist.

— 1 —

Patentansprüche:

1. Verwendung einer schmiedbaren Titanlegierung, die zu 4 bis 30 % aus metallischen Legierungselementen wie Aluminium, Eisen, Kobalt, Kupfer, Molybdän, Nickel, Niob, Silizium, Tantal, Wolfram, Vanadium, Zinn, Zirkonium, einzeln oder zu mehreren Rest Titan und erschmelzungsbedingte Verunreinigungen besteht, zur Herstellung von Schneide und Gegenschneide aufweisenden Trennwerkzeugen, insbesondere Einhandscheren, mit der Maßgabe, daß die Schneide und Gegenschneide bildenden Flächen mit einer 0,001 bis 0,020 mm dicken Hartstoffschicht versehen sind.

2. Verwendung einer schmiedbaren Titanlegierung, die zu 4 bis 30 % aus metallischen Legierungselementen wie Aluminium, Eisen, Kobalt, Kupfer, Molybdän, Nickel, Niob, Silizium, Tantal, Wolfram, Vanadium, Zinn, Zirkonium, einzeln oder zu mehreren Rest Titan und erschmelzungsbedingte Verunreinigungen besteht, für den Zweck nach Anspruch 1, mit der Maßgabe, daß die Schneide und Gegenschneide bildenden Flächen nach dem Schleifen und vor dem Erzeugen der Hartstoffschichten poliert werden.

84/404 EP
W/Ka

3. Verwendung einer schmiedbaren Titanlegierung, bestehend aus

5 - 7 % Aluminium

3 - 5 % Vanadium

Rest Titan und erschmelzungsbedingte Verunreinigungen für den Zweck nach Anspruch 1, insbesondere für Friseurscheren.

4. Verwendung einer schmiedbaren Titanlegierung, bestehend aus

4 - 6 % Aluminium

2 - 4 % Eisen

bis 0,1 % Kohlenstoff

Rest Titan und erschmelzungsbedingte Verunreinigungen für den Zweck nach Anspruch 1, insbesondere für Friseurscheren.

5. Verwendung einer schmiedbaren Titanlegierung in der Zusammensetzung nach einem der Ansprüche 2 bis 4 für den Zweck nach Anspruch 1, insbesondere für Friseurscheren, mit der Maßgabe, daß die Hartstoffschicht durch Nitrieren der Titanoberfläche erzeugt worden ist.

6. Verfahren zum Herstellen einer Einhandschere aus Metall, wobei aus Metallstreifen Rohlinge der beiden Scherenhälften gesenkgeschmiedet werden, die Rohlinge eine mechanische Bearbeitung erfahren und im Zuge der mechanischen Bearbeitung die Schneiden an den Scherblättern hergestellt, die Scherblätter geschliffen und abschließend die Scherenhälften über einen Gewerbebolzen gelenkig miteinander verbunden werden, **d a d u r c h   g e k e n n z e i c h n e t,** daß mindestens Scherblatt (5, 6) und Halm (7, 8) jeder Scherenhälfte (1, 2) aus einer schmiedbaren Titanlegierung, die zu

4 - 30 % aus metallischen Legierungselementen wie Aluminium, Eisen, Kobalt, Kupfer, Molybdän, Nickel, Niob, Silizium, Tantal, Wolfram, Vanadium, Zinn, Zirkonium, einzeln oder zu mehreren Rest Titan und erschmelzungsbedingte Verunreinigungen besteht, hergestellt und mindestens an den Schneide und Gegenschneide bildenden Flächen durch Nitrieren, Karburieren, Borieren, Oxydieren oder Plasmaspritzen, mit einer Hartstoffschicht versehen werden.

7.   Einhandschere aus Metall, insbesondere Friseurschere, mit zwei jeweils aus Scherenblatt, Halm und Griffauge bestehenden Scherenhälften, die durch einen Gewerbebolzen miteinander verbunden sind, **d a d u r c h   g e k e n n z e i c h n e t,** daß Scherblatt (5, 6) und Halm (7, 8) jeder Scherenhälfte (1, 2) aus einer schmiedbaren Titanlegierung bestehen und an den Schneide und Gegenschneide bildenden Flächen eine 0,001 bis 0,020 mm dicke Hartstoffschicht aufweisen.

8.   Einhandschere nach Anspruch 7, **d a d u r c h   g e k e n n z e i c h n e t,** daß bei beiden Scherenhälften (1, 2) die hohle Blattseite (15, 16) zwischen dem Rücken (17, 18) und der Schneide (11, 12) des Scherblattes (5, 6) einen konkaven Innenschliff und die Außenseite (20, 21) eine konvexe Form aufweisen.

9. Einhandschere nach einem der Ansprüche 7 und 8, bei der die die Schneide bildenden Flächen, nämlich die hohle Blattseite und die Wate einen Winkel ($\alpha$) von unter 70° einschließen, dadurch gekennzeichnet, daß sich der von hohler Blattseite (15, 16) und Wate (13, 14) eingeschlossene Winkel ($\alpha$) vom Gewerbe (3) zur Spitze (9, 10) stetig ändert.

10. Einhandschere nach Anspruch 9, dadurch gekennzeichnet, daß der von hohler Blattseite (15, 16) und Wate (13, 14) gebildete Winkel ($\alpha$) gewerbeseitig zwischen 55° und 65° und an den Spitzen (9, 10) zwischen 35° und 50° liegt.

11. Einhandschere nach einem der Ansprüche 7 bis 10, dadurch gekennzeichnet, daß der Freiwinkel ($\beta$) zwischen der in die Schneide (11, 12) einlaufenden hohlen Blattseite (15, 16) und einer die beiden Kanten der hohlen Blattseite auf kurzem Wege verbindenden gedachten Linie (31) vom Gewerbe (3) zur Spitze (9, 10) hin zunimmt.

12. Einhandschere nach einem der Ansprüche 7 bis 11, dadurch gekennzeichnet, daß in an sich bekannter Weise im Gewerbe (3) zwischen Gewerbebolzen (4) und zugeordnetem Halm (8) in der Fortsetzung der hohlen Blattseite (15) einer Scherenhälfte (1) in eine Vertiefung (28) ein Gleitstück (23) aus Kunststoff oder dergleichen eingesetzt ist, das bei sich schließender und geschlossener Schere Widerlager für die Blätter (5, 6) ist.

13. Einhandschere nach einem der Ansprüche 7 bis 12, dadurch gekennzeichnet, daß der Gewerbebolzen (4) aus Edelstahl besteht.

14. Einhandschere nach Anspruch 13, dadurch gekennzeichnet, daß der Gewerbebolzen (4) vergoldet ist.

15. Einhandschere nach einem der Ansprüche 7 bis 12, dadurch gekennzeichnet, daß der Gewerbebolzen (4) aus einer Titanlegierung besteht und mit einer Nitridschicht versehen ist.

16. Einhandschere nach Anspruch 15, dadurch gekennzeichnet, daß die Titanlegierung aus der die Scherenhälften (1, 2) hergestellt sind und die Titanlegierung des Gewerbebolzens (4) unterschiedliche Streckgrenzen aufweisen.

17. Einhandschere nach einem der Ansprüche 7 bis 16, dadurch gekennzeichnet, daß der Gewerbebolzen (4) in an sich bekannter Weise eine Senkkopfschraube ist, die mit Spiel in einer Bohrung (25) einer Scherenhälfte (2) angeordnet und durch eine konische Gewindeverbindung in der anderen Scherenhälfte (1) gehalten ist.

18. Einhandschere nach Anspruch 17, dadurch gekennzeichnet, daß zwischen dem Gewerbebolzen (4) und der Senkung (26) der Bohrung (25) eine Kunststoffscheibe (29) angeordnet ist.

- 6 -

0156395

19. Einhandschere nach einem der Ansprüche 7 bis 18, **d a d u r c h    g e k e n n z e i c h n e t,**
daß das Scherblatt (5, 6) zum Halm (7, 8) in einem Längenverhältnis von b : d = 1 : 1,1 bis 1 : 1,4 steht.

Fig.1

Fig.2

3/3

0156395

Fig.3

Fig.4

Fig.5

Fig.6

Fig.7